Europäisches Patentamt

European Patent Office

Office européen des brevets

(11) Veröffentlichungsnummer: **0 033 832**
A1

# EUROPÄISCHE PATENTANMELDUNG

(21) Anmeldenummer: 81100076.9

(22) Anmeldetag: 08.01.81

(51) Int. Cl.³: **B 65 G 65/34**

(30) Priorität: **09.02.80 DE 3004945**

(71) Anmelder: **Degussa Aktiengesellschaft,
Weissfrauenstrasse 9, D-6000 Frankfurt am Main 19 (DE)**

(43) Veröffentlichungstag der Anmeldung: **19.08.81
Patentblatt 81/33**

(72) Erfinder: **Schmitz, Werner, Lapshof 4,
D-6467 Hasselroth 2 (DE)**
Erfinder: **Simon, Edgar, Bergstrasse 24,
D-6463 Freigericht 5 (DE)**

(84) Benannte Vertragsstaaten: **AT BE CH DE FR GB IT LI NL
SE**

(54) **Vorrichtung zum Entleeren von mit Pulvern gefüllten Behältern.**

(57) Pulver mit einem relativ niedrigen Schüttgewicht lassen sich nur unter großer unerwünschter Staubbildung aus Transportbehältern entleeren. Die Vorrichtung zum Entleeren von mit Pulvern gefüllten Behältern besteht aus einem Saugrohr, an dem in der Nähe des offenen Endes des Rohres (1) eine Fluidisiervorrichtung (4) angeordnet ist. Die Fluidisiervorrichtung kann die Form eines konzentrisch um das Rohr angeordneten Doppelmantelkegels oder einer konzentrisch um das Rohr angeordneten Hohlkugel aufweisen. Durch in Richtung der Öffnung des Rohres angeordnete Bohrungen (5) kann die Fluidisierluft in das Pulver geführt werden. Zum Vermeiden des Ansaugens des Saugrohres an der Behälterwand ist die Öffnung (3) des Saugrohres zinnenförmig gerändert.

ACTORUM AG

Deutsche Gold- und Silber-Scheideanstalt
vormals Roessler
6000 Frankfurt am Main 1, Weißfrauenstr. 9

Vorrichtung zum Entleeren von mit Pulvern gefüllten Behältern

Pulver mit einem sehr niedrigen Schüttgewicht, wie zum
Beispiel pyrogen hergestelltes Siliciumdioxid, werden
als sogenannte Bulkware in kastenförmigen Behältern transportiert.

Derartige Behälter haben jedoch den Nachteil, daß sie unhandlich sind und das in ihnen enthaltende Pulver nur durch
umständliche Manipulationen und unter erheblicher Staubbelästigung entleert werden kann.

Gegenstand der vorliegenden Anmeldung ist eine Vorrichtung
zum Entleeren von mit Pulvern gefüllten Behältern, welche
dadurch gekennzeichnet ist, daß sie aus einem Rohr besteht, welches an dem einen Ende mit einem Schlauch versehen ist und an dem anderen Ende eine Öffnung aufweist,
wobei in der Nähe der Öffnung eine Fluidisiervorrichtung
angeordnet ist.

Die Fluidisiervorrichtung kann konzentrisch um das Rohr angeordnet sein. In einer Ausführungsform kann dabei die Fluidisiervorrichtung aus einem Doppelkegelmantel bestehen, wobei der Kegelmantel, der zu der Öffnung ausgerichtet ist, Bohrungen aufweist, und der Kegelmantel, der zu der mit einem Schlauch versehenen Öffnung ausgerichtet ist, mit einer Gaszufuhröffnung versehen ist.

In einer weiteren Ausführungsform der Erfindung kann die Fluidisiervorrichtung die Form einer Hohlkugel aufweisen, wobei der Halbkugelmantel, der zu der Öffnung des Rohres ausgerichtet ist, Bohrungen aufweist, während der Halbkugelmantel, welcher die Öffnung des Rohres entgegengesetzt ist, mit einer Gaszufuhröffnung versehen ist.

Die Gaszufuhröffnung kann mit einer Gaszufuhrleitung verbunden sein, die parallel zu dem Rohr angeordnet ist.

In einer Ausführung der Erfindung kann die Gaszufuhrleitung koaxial um das Rohr angeordnet sein.

In einer besonderen Ausführungsform kann die erfindungsgemäße Vorrichtung an der Öffnung einen zinnenförmigen Rand aufweisen.

Besonders vorteilhaft ist es, wenn diese Öffnung einen rechteckigen Querschnitt aufweist. In einem Sonderfall des rechteckigen Querschnittes kann dieser eine quadratische Form aufweisen.

Die erfindungsgemäße Vorrichtung wird bei ihrer Anwendung mittels dem Schlauch mit einer Membran-Pumpe verbunden, welche das Pulver aus dem Behälter heraussaugt.

Gleichzeitig kann über die Gaszufuhrleitung z.B. Preßluft in das Pulver in der Umgebung der Öffnung sowohl als
Dauerstrom als auch als Impuls hineingegeben werden. Dadurch wird das Pulver fluidisiert und kann leichter aus
dem Behälter gesaugt werden.

Die zinnenförmige Ausbildung des Randes der Öffnung verhindert ein Ansaugen der Öffnung an der Wandung des Behälters.

Die erfindungsgemäße Vorrichtung wird anhand der Zeichnung näher erläutert und beschrieben:
Es zeigen

Figur 1   die erfindungsgemäße Vorrichtung mit einer Fluidisiervorrichtung, bestehend aus einem zu dem Rohr
          koaxial angeordneten Doppelmantelkegel und einer
          parallel zu dem Rohr angeordneten Gaszufuhrleitung
          im Querschnitt.

Figur 2   die erfindungsgemäße Vorrichtung mit einer Fluidisiervorrichtung, bestehend aus einer zu dem Rohr
          koaxial angeordneten Hohlkugel und einer koaxial
          um das Rohr angeordneten Gaszufuhrleitung im
          Querschnitt.

Figur 3   eine zinnenförmige geränderte Öffnung mit recht-
          eckigem Querschnitt.

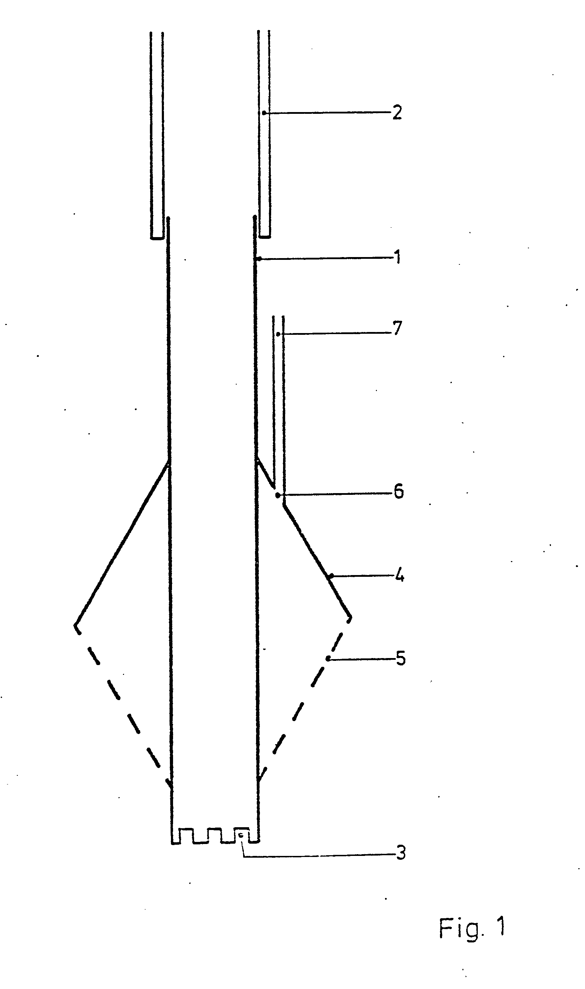

Gemäß Figur 1 besteht die erfindungsgemäße Vorrichtung
aus dem Rohr 1 an dem der Schlauch 2 angeordnet ist. In
der Nähe der zinnenförmig geränderten Öffnung 3 ist die Fluidisiervorrichtung 4 in Form des Doppelmantelkegels koaxial zu dem Rohr 1 angeordnet. Diese weist die Bohrungen 5 sowie eine Gaszufuhröffnung 6 auf. An die Gaszufuhröffnung 6 ist die Gaszufuhrleitung 7 angeordnet.

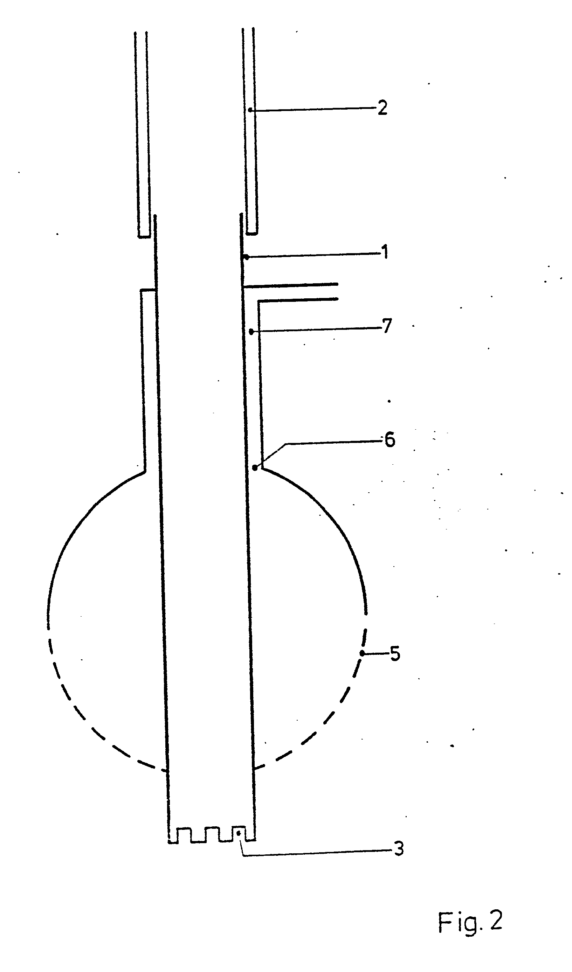

Gemäß der Figur 2 ist die Gaszufuhrleitung 7 koaxial um das Rohr 1 angeordnet. Die Fluidisiervorrichtung 4 besteht aus einer koaxial zu dem Rohr angeordneten Hohlkugel und weist die Bohrungen 5 auf.

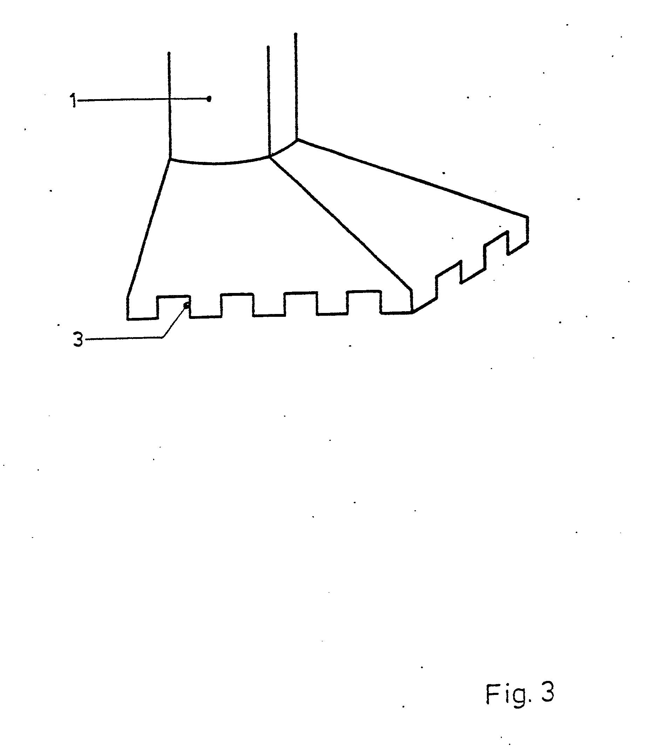

Gemäß der Figur 3 ist an dem Rohr 1 die Öffnung 3 mit einem zinnenförmigen Rand angeordnet, wobei der Querschnitt der Öffnung die Form eines Rechteckes aufweist.

Deutsche Gold- und Silber-Scheideanstalt
vormals Roessler
6000 Frankfurt am Main 1, Weißfrauenstr. 9

Vorrichtung zum Entleeren von mit Pulvern gefüllten Behältern

Patentansprüche

1. Vorrichtung zum Entleeren von mit Pulvern gefüllten
Behältern, dadurch gekennzeichnet, daß sie aus einem
Rohr besteht, welches an dem einen Ende mit einem
Schlauch versehen ist und an dem anderen Ende eine
Öffnung aufweist, wobei in der Nähe der Öffnung eine
Fluidisiervorrichtung angeordnet ist.

2. Vorrichtung nach Anspruch 1, dadurch gekennzeichnet,
daß die Fluidisiervorrichtung konzentrisch um das
Rohr angeordnet ist.

3. Vorrichtung gemäß Anspruch 2, dadurch gekennzeichnet,
daß die Fluidisiervorrichtung aus einem Doppelkegelmantel besteht, wobei der Kegelmantel, welcher zu der
Öffnung ausgerichtet ist, Bohrungen aufweist, und der
Kegelmantel, der zu der mit einem Schlauch versehenen
Öffnung ausgerichtet ist, mit einer Gaszufuhröffnung
versehen ist.

4. Vorrichtung gemäß Anspruch 2, dadurch gekennzeichnet, daß die Fluidisiervorrichtung die Form einer Hohlkugel aufweist, wobei der Halbkugelmantel, der zu der Öffnung des Rohres ausgerichtet ist, Bohrungen aufweist und der Halbkugelmantel, der der Öffnung des Rohres entgegengesetzt ist, mit einer Gaszufuhröffnung versehen ist.

5. Vorrichtung gemäß Anspruch 3, oder 4, dadurch gekennzeichnet, daß die Gaszufuhröffnung mit einer Gaszufuhrleitung verbunden ist, die parallel zu dem Rohr angeordnet ist.

6. Vorrichtung gemäß Anspruch 5, dadurch gekennzeichnet, daß die Gaszufuhrleitung koaxial um das Rohr angeordnet ist.

7. Vorrichtung gemäß den Ansprüchen 1 bis 6, dadurch gekennzeichnet, daß die Öffnung einen zinnenförmigen Rand aufweist.

8. Vorrichtung gemäß dem Anspruch 7, dadurch gekennzeichnet, daß die Öffnung mit einem zinnenförmigen Rand einen rechteckigen Querschnitt aufweist.

Fig. 1

Fig.2

Fig. 3

0033832

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 456 397 (GATTYS) <br><br> + Zeichnung + <br><br> ---- | 1,2,6 |

**KLASSIFIKATION DER ANMELDUNG (Int. Cl.³)**

B 65 G 65/34

**RECHERCHIERTE SACHGEBIETE (Int. Cl.³)**

B 65 B 69/00
B 65 D 88/00
B 65 G 53/00
B 65 G 65/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 15-04-1981 | MELZER |

EPA form 1503.1   06.78